# EUROPEAN PATENT APPLICATION

(11) **EP 3 567 214 A1**
(43) Date of publication of application: **13.11.2019**
(21) Application number: 19172376.6
(22) Date of filing: 02.05.2019
(51) Int. Cl.: F01D 5/00, F01D 5/22

(54) **METHOD FOR RESTORING IN-SITU THE INITIAL TENSION OF THE SHROUD OF THE BLADES OF A GAS TURBINE**

(30) Priority: 07.05.2018 US 201815972438
(71) Applicant: General Electric Company, Schenectady, NY 12345 (US)
(72) Inventor: DIWINSKY, David Scott, Cincinnati, OH Ohio 45215 (US)
(74) Representative: Openshaw & Co.

(57) **Abstract**

A method is provided for repairing a turbine engine including a stage of vanes, the stage of vanes including a first vane having a first shroud and a second vane having a second shroud. The method includes: inspecting the stage of vanes in situ, wherein inspecting the stage of vanes in situ includes determining an actual gap width of a gap defined between the first shroud of the first vane and the second shroud of the second vane is greater than a predetermined threshold; and installing a shim in situ in the gap between the first shroud and the second shroud.

## Description

### FIELD

The present subject matter relates generally to a stage of interlocking airfoils, and a method of repairing the same.

### BACKGROUND

At certain gas turbine engines include, in serial flow arrangement, a compressor section including a low pressure compressor and a high-pressure compressor for compressing air flowing through the engine, a combustor for mixing fuel with the compressed air such that the mixture may be ignited, and a turbine section including a high pressure turbine and a low pressure turbine for providing power to the compressor section.

Each of the compressors and turbines may include multiple stages of vanes for adding energy to, or extracting energy from, the air flowing therethrough. One or more of the stages of vanes may have vanes configured to interlock at their respective radially outer ends to reduce a relative movement therebetween. For example, the low pressure turbine may include a stage of low pressure turbine rotor blades having radially outer ends configured to interlock to reduce a relative movement therebetween.

It will be appreciated that through the normal course of operation, the radially outer ends of the stage of vanes designed to interlock may wear down, such that their ability to reduce relative movement therebetween is lessened. In order to repair such wear, the engine must be taken off wing and disassembled such that the radially outer ends may be built up and retooled to a desired shape. Such may be a time-consuming and costly exercise. Accordingly, an improved way to repair the radially outer ends of interlocking vanes would be useful.

### BRIEF DESCRIPTION

Aspects and advantages of the invention will be set forth in part in the following description, or may be obvious from the description, or may be learned through practice of the invention.

In one aspect of the present disclosure, a method is provided for repairing a turbine engine including a stage of vanes, the stage of vanes including a first vane having a first shroud and a second vane having a second shroud. The method includes: inspecting the stage of vanes in situ, wherein inspecting the stage of vanes in situ includes determining an actual gap width of a gap defined between the first shroud of the first vane and the second shroud of the second vane is greater than a predetermined threshold; and installing a shim in situ in the gap between the first shroud and the second shroud.

In certain exemplary aspects installing the shim in situ in the gap between the first shroud and the second shroud includes permanently affixing the shim in the gap between the first shroud and the second shroud.

For example, in certain exempt aspects permanently affixing the shim in the gap includes welding the shim to the first shroud, the second shroud, or both.

In certain exemplary aspects installing the shim in situ in the gap includes installing the shim having a width substantially equal to the actual gap width.

In certain exemplary aspects the stage of vanes is a stage of turbine rotor blades.

For example, in certain exempt aspects the stage of turbine rotor blades is a stage of low pressure turbine rotor blades.

For example, in certain exempt aspects the stage of low pressure turbine rotor blades is an aft-most stage of low pressure turbine rotor blades.

In certain exemplary aspects the first shroud defines a first interlock interface, wherein the second shroud defines a second interlock interface, and wherein the first interlock interface and second interlock interface are correspondingly shaped to fit together.

In certain exemplary aspects the method further includes preparing in situ the gap defined between the first shroud and the second shroud for installation of the shim.

For example, in certain exempt aspects preparing in situ the gap defined between the first shroud and the second shroud for installation of the shim includes removing material from the gap defined between the first shroud and the second shroud.

For example, in certain exempt aspects preparing in situ the gap defined between the first shroud and the second shroud for installation of the shim includes preparing in situ the gap defined between the first shroud and the second shroud with a snake tool.

In certain exemplary aspects inspecting the stage of vanes in situ further includes inspecting the stage of vanes in situ with a snake tool.

In certain exemplary aspects installing the shim in situ in the gap between the first shroud and the second shroud includes installing the shim in the gap between the first shroud and the second shroud in situ with a snake tool.

In certain exemplary aspects the first vane and the second vane are two vanes of a plurality of vanes of the stage of vanes, wherein each of the plurality of vanes includes an shroud at a respective radially outer end, wherein inspecting the vanes further includes determining at least one actual gap width of a plurality of actual gap widths of a respective plurality of gaps defined between adjacent shrouds in the stage of vanes greater than the predetermined threshold, and wherein installing the shim in situ in the gap between the first shroud and the second shroud includes installing the shim in situ in one or more of the plurality of gaps having a determined actual gap width greater than the predetermined threshold.

In certain exemplary aspects installing the shim in situ in the gap between the first shroud and the second shroud includes installing a plurality of shims in the gap between the first shroud and the second shroud.

In an exemplary embodiment of the present disclosure, a repair tool is provided for a gas turbine engine. The repair tool includes a snake arm. The repair tool also includes a base having the snake arm attached thereto, the base including one or more motors operably coupled to the snake arm and a controller. The controller is operably coupled to the one or more motors and includes one or more processors and memory, the memory storing data and instructions that when processed by the one or more processors cause the repair tool to perform functions. The functions include: inspecting a stage of vanes of the gas turbine engine in situ, wherein inspecting the stage of vanes in situ includes determining an actual gap width of a gap defined between a first shroud of a first vane in the stage of vanes and a second shroud of a second vane in the stage of vanes is greater than a predetermined threshold; and installing a shim in situ in the gap between the first shroud and the second shroud with the snake arm.

In certain exemplary embodiments installing the shim in situ in the gap between the first shroud and the second shroud with the snake arm includes permanently affixing the shim in the gap between the first shroud and the second shroud with the snake arm.

For example, in certain exemplary embodiments permanently affixing the shim in the gap with the snake arm includes welding the shim to the first shroud, the second shroud, or both with the snake arm.

In certain exemplary embodiments installing the shim in situ in the gap with the snake arm includes installing the shim having a width substantially equal to the actual gap width with the snake arm.

In certain exemplary embodiments the functions further include preparing the gap defined between the first shroud and the second shroud for installation of the shim in situ with the snake arm.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 is a schematic view of a gas turbine engine in accordance with an exemplary embodiment of the present disclosure.
Fig. 2 is a close-up, schematic view of a turbine within a turbine section of the exemplary gas turbine engine of Fig. 1 in accordance with an exemplary embodiment of the present disclosure.
Fig. 3 is a perspective view of a section of vanes of the exemplary turbine of Fig. 2 in accordance with an exemplary embodiment of the present disclosure.
Fig. 4 is a plan view of the radially outer ends of a plurality of vanes of the exemplary turbine of Fig. 2 in accordance with an exemplary embodiment of the present disclosure.
Fig. 5 is a plan view of the exemplary radially outer ends of the plurality of vanes of Fig. 4 in a repaired condition.
Fig. 6 is a plan view of the radially outer ends of a plurality of vanes in accordance with an exemplary embodiment of the present disclosure in a first repair step.
Fig. 7 is a plan view of the exemplary radially outer ends of the plurality of vanes of Fig. 6 in a second repair step.
Fig. 8 is a plan view of the exemplary radially outer ends of the plurality of vanes of Fig. 6 in a third repair step.
Fig. 9 is a plan view of a plurality of vanes of a turbine in accordance with another exemplary embodiment of the present disclosure.
Fig. 10 is a plan view of the plurality of vanes of the exemplary turbine of Figs. 9, with shims in accordance with another exemplary embodiment of the present disclosure installed.
Fig. 11 is a cross-sectional view of the plurality of vanes of the exemplary turbine of Fig. 10, along Line 11-11 in Figs. 10.
Fig. 12 is a flow diagram of a method for repairing a stage of vanes in accordance with an exemplary aspect of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, affixing, or attaching, as well as indirect coupling, affixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

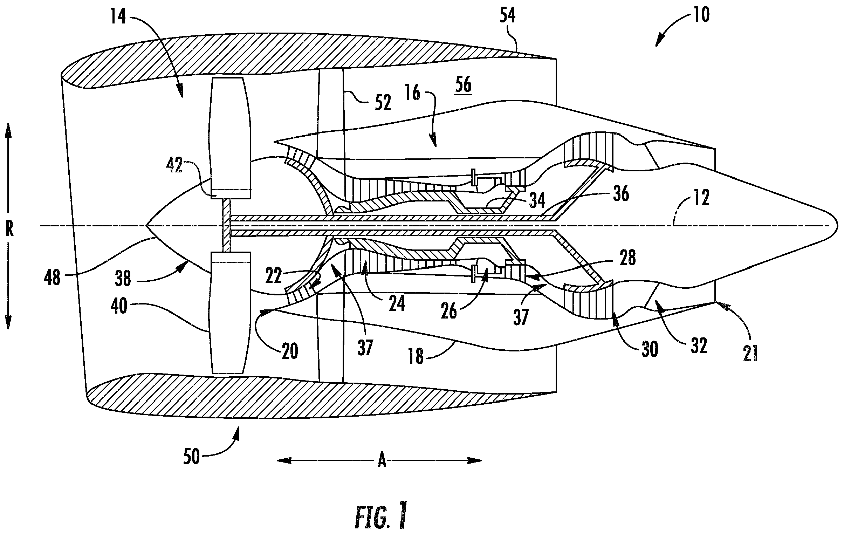

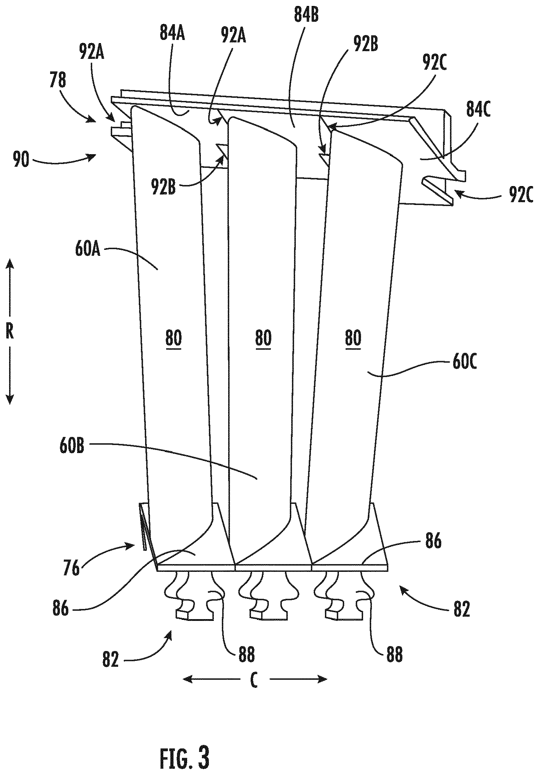

Referring now to the drawings, wherein identical numerals indicate the same elements throughout the figures, Fig. 1 is a schematic cross-sectional view of a gas turbine engine in accordance with an exemplary embodiment of the present disclosure. More particularly, for the embodiment of Fig. 1, the gas turbine engine is a high-bypass turbofan jet engine, referred to herein as "turbofan engine 10." As shown in Fig. 1, the turbofan engine 10 defines an axial direction A (extending parallel to a longitudinal axis 12 provided for reference) and a radial direction R. The turbofan engine 10 also defines a circumferential direction C (see Fig. 3) extending circumferentially about the axial direction A. In general, the turbofan engine 10 includes a fan section 14 and a turbomachine 16 disposed downstream from the fan section 14.

The exemplary turbomachine 16 depicted is generally enclosed within a substantially tubular outer casing 18 that defines an annular inlet 20 and an annular exhaust 21. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The compressor section, combustion section 26, turbine section, and nozzle section 32 together define a core air flowpath 37 therethrough.

For the embodiment depicted, the fan section 14 includes a fixed pitch fan 38 having a plurality of fan blades 40. The fan blades 40 are each attached to a disk 42, with the fan blades 40 and disk 42 together rotatable about the longitudinal axis 12 by the LP shaft 36. For the embodiment depicted, the turbofan engine 10 is a direct drive turbofan engine, such that the LP shaft 36 drives the fan 38 of the fan section 14 directly, without use of a reduction gearbox. However, in other exemplary embodiments of the present disclosure, the fan 38 may instead be a variable pitch fan, and the turbofan engine 10 may include a reduction gearbox, in which case the LP shaft 36 may drive the fan 38 of the fan section 14 across the gearbox.

Referring still to the exemplary embodiment of Fig. 1, the disk 42 is covered by rotatable front hub 48 aerodynamically contoured to promote an airflow through the plurality of fan blades 40. Additionally, the exemplary turbofan engine 10 includes an annular nacelle assembly 50 that circumferentially surrounds the fan 38 and/or at least a portion of the turbomachine 16. For the embodiment depicted, the nacelle assembly 50 is supported relative to the turbomachine 16 by a plurality of circumferentially-spaced outlet guide vanes 52. Moreover, a downstream section 54 of the nacelle assembly 50 extends over an outer portion of the casing 18 so as to define a bypass airflow passage 56 therebetween. The ratio between a first portion of air through the bypass airflow passage 56 and a second portion of air through the inlet 20 of the turbomachine 16, and through the core air flowpath 37, is commonly known as a bypass ratio.

It should be appreciated, however, that the exemplary turbofan engine 10 depicted in Fig. 1 is by way of example only, and that in other exemplary embodiments, the turbofan engine 10 may have any other suitable configuration, including, for example, any other suitable number of shafts or spools, turbines, compressors, etc. Additionally, or alternatively, in other exemplary embodiments, any other suitable turbine engine may be provided. For example, in other exemplary embodiments, the turbine engine may not be a turbofan engine, and instead may be configured as a turboshaft engine, a turboprop engine, turbojet engine, etc.

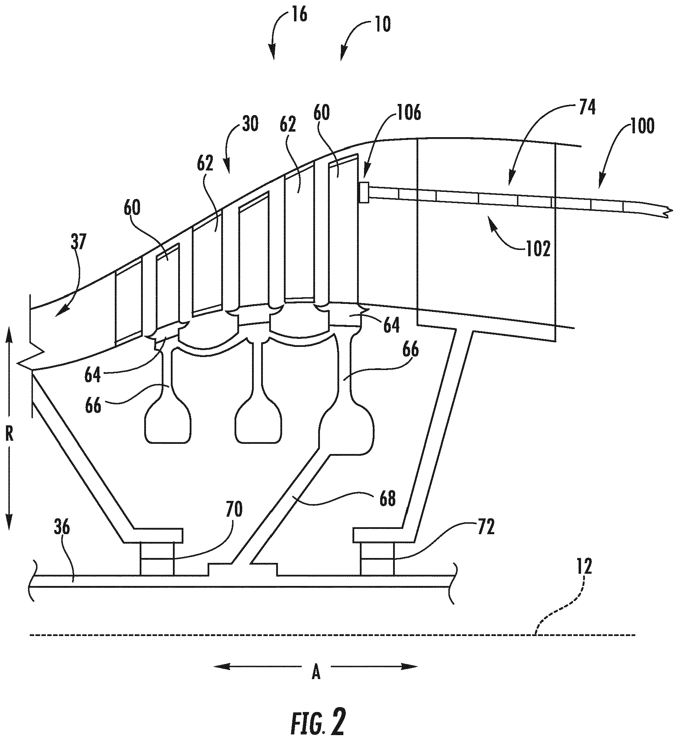

Referring now to Fig. 2, a close-up, schematic view of an aft end of the turbomachine 16 of the exemplary turbofan engine 10 of Fig. 1 is provided. Specifically, Fig. 2 provides a close-up, schematic view of the LP turbine 30 of the turbine section of the exemplary turbofan engine 10 of Fig. 1.

As is depicted, the LP turbine 30 generally includes alternating stages of vanes, and more specifically, includes alternating stages of LP turbine rotor blades 60 and LP turbine stator vanes 62. Accordingly, it will be appreciated that as used herein, the term "vane" may be used to refer to a rotor blade or a guide vane. Each of the plurality LP turbine rotor blades 60 are attached at a base 64 to a respective LP turbine rotor 66. The LP turbine rotor 66 of each stage of LP turbine rotor blades 60 is connected to an adjacent LP turbine rotor 66-the plurality of LP turbine rotors 66 further connected to the LP shaft 36 through an LP shaft extension 68. Accordingly, a flow of combustion gasses through the LP turbine 30 rotates the plurality of LP turbine rotor blades 60 and LP turbine rotors 66, which in turn rotates the LP shaft 36. Additionally, as noted, the LP turbine 30 includes the plurality of stages of LP turbine stator vanes 62, each of which attached to the casing 18 of the turbomachine 16. As will be appreciated, the stages of LP turbine stator vanes 62 may increase an efficiency of the LP turbine 30. For the embodiment depicted, each stage of LP turbine stator vanes 62 is positioned between adjacent stages of LP turbine rotor blades 60 or adjacent to a stage of LP turbine rotor blades 60.

Briefly, it will further be appreciated, that for the embodiment depicted, the LP shaft 36 is supported by a forward bearing 70 and an aft bearing 72. It should be appreciated, however, that in other exemplary embodiments, the LP shaft 36 may instead be supported in any other suitable manner. For example, in other exemplary embodiments, both the forward and aft bearings 70, 72 may be positioned forward of the extension member 68 of the LP shaft 36, or alternatively, may both be positioned aft of the extension member 68 of the LP shaft 36. Further, it will be appreciated that although the exemplary LP turbine 30 depicted includes three stages of LP turbine rotor blades 60 and LP turbine stator vanes 62, in other exemplary embodiments, the LP turbine 30 may include any other suitable number and/or configuration of stages of LP turbine rotor blades 60 and/or stator vanes 62. Other configurations are contemplated as well.

Referring still to Fig. 2, and now also to Fig. 3, it will be appreciated that the LP turbine 30 includes an aft most stage of LP turbine vanes, or more specifically, an aft most stage of LP turbine guide vanes 62 and LP turbine rotor blades 60. Fig. 3 provides a close-up view of a plurality of LP turbine vanes of the aft most stage of the LP turbine, or more specifically, of the aft most stage of LP turbine rotor blades 60 of the LP turbine 30.

As is depicted, the plurality of LP turbine rotor blades 60 are spaced along the circumferential direction C from one another and each extends along the radial direction R between a radially inner end 76 and a radially outer end 78. Further, each of the LP turbine rotor blades 60 includes an airfoil 80, a base portion 82 at the radially inner end 76, and an outer shroud 84 at the radially inner end 76, with the airfoil 80 extending between the base portion 82 and the outer shroud 84 along the radial direction R. The base portion 82 of each of the LP turbine rotor blades 60 includes an inner band 86 and a dovetail member 88. The dovetail member 88 is configured for insertion into a correspondingly shaped dovetail slot (not shown) of a respective rotor 66 (such as the aft most rotor 66 depicted in Fig. 2). Additionally, the inner bands 86 of the plurality of LP turbine rotor blades 60 together form an inner ring, or platform, at least partially defining the core air flowpath 37 through the LP turbine 30 (see Fig. 2).

As stated, each of the LP turbine rotor blades 60 includes the outer shroud 84 at a respective radially outer end 78. The outer shrouds 84 of the plurality of LP turbine rotor blades 60 together form an outer ring 90, or platform, also at least partially defining the core air flowpath 37 through the LP turbine 30 (see Fig. 2). Notably, for the embodiment depicted, the aft most stage of LP turbine rotor blades 60 is configured as an interlocking stage of LP turbine rotor blades 60. More specifically, the outer shroud 84 of each LP turbine rotor blade 60 defines interlocking interfaces 92 that are correspondingly shaped with the interlocking interfaces 92 of the outer shrouds 84 of the adjacent LP turbine rotor blades 60 such that they fit together. Such may prevent unwanted movement of the LP turbine rotor blades 60 during operation of the engine 10.

For example, for the embodiment depicted, the plurality of LP turbine rotor blades 60 of the aft most stage of LP turbine rotor blades 60 includes a first rotor blade 60A, a second rotor blade 60B, and a third rotor blade 60C spaced sequentially along the circumferential direction C, and positioned adjacent to one another. The first rotor blade 60A includes a first outer shroud 84A along the radial direction R, the second rotor blade 60B includes a second outer shroud 84B along the radial direction R, and the third rotor blade 60C includes a third outer shroud 84C along the radial direction R. The first outer shroud 84A defines a first interlock interface 92A (or rather, a pair of first interlock interfaces 92A at circumferential ends of the first outer shroud 84A), the second outer shroud 84B defines a second interlock interface 92B (or rather, a pair of second interlock interfaces 92B at circumferential ends of the second outer shroud 84B), and the third outer shroud 84C defines a third interlock interface 92C (or rather, a pair of third interlock interfaces 92C at circumferential ends of the third outer shroud 84C). One of the first interlock interfaces 92A of the first outer shroud 84A and one of the second interlock interfaces 92B of the second outer shroud 84B are correspondingly shaped to fit together to prevent, or at least minimize, movement of the first outer shroud 84A relative to the second outer shroud 84B during operation of the engine. Additionally, the other of the second interlock interfaces 92B of the second outer shroud 84B and one of the third interlock interfaces 92C of the third outer shroud 84C are also correspondingly shaped to fit together to prevent, or at least minimize, movement of the second outer shroud 84B relative to the third outer shroud 84C during operation of the engine.

It will be appreciated that although the various outer shrouds are discussed herein as including the interlock interfaces 92 (repaired according to aspects of the present disclosure; see below), in other embodiments and aspects, inner shrouds or mid-span shrouds may additionally or alternatively be repaired in accordance with one or more exemplary aspects of the present disclosure.

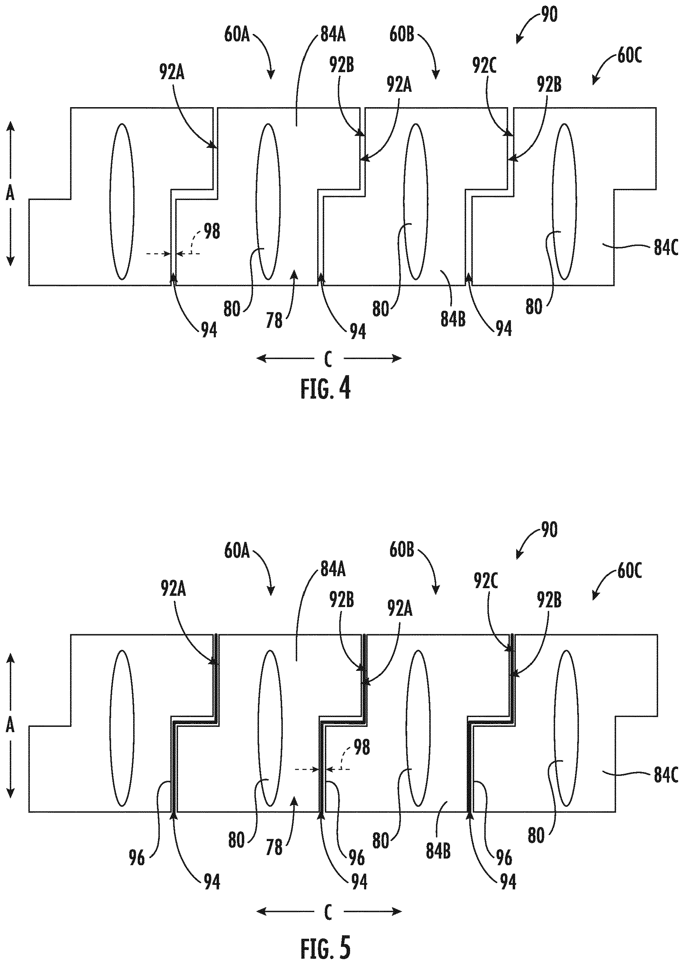

Referring now to Fig. 4, a plan view of the outer shrouds 84 of a stage of turbine vanes of a turbine of an engine in accordance with an exemplary embodiment of the present disclosure is depicted. More specifically, for the embodiment of Fig. 4, the stage of turbine vanes is a stage of turbine vanes of an LP turbine 30, and more specifically, is an aft most stage of LP turbine vanes, such as an aft most stage of LP turbine rotor blades 60 (similar to the vanes discussed above with reference to Fig. 3). Accordingly, it will be appreciated that in certain exemplary embodiments, the stage of LP turbine rotor blades 60 depicted in Fig. 4 may be configured in substantially the same manner as the embodiment described above with reference to Figs. 1 through 3, and further that the same or similar numbers may refer to the same or similar part.

As is depicted, the stage of LP turbine rotor blades 60 depicted in Fig. 4 is configured as a stage of interlocking turbine vanes, with each LP turbine rotor blade 60 including an airfoil 80 and an outer shroud 84 positioned at a radially outer end 78 of the respective LP turbine rotor blade 60-the outer shrouds 84 together forming an outer platform 90. Each outer shroud 84 defines an interlock interface 92, or rather, a pair of interlock interfaces 92, with each interlock interface 92 being correspondingly shaped with the interlock interfaces 92 of an adjacent outer shroud 84 to minimize or prevent undesired movement therebetween. For example, for the embodiment depicted, the stage of LP turbine rotor blades 60 includes a first LP turbine rotor blade 60A having a first outer shroud 84A and a second LP turbine rotor blade 60B having a second outer shroud 84B. The first outer shroud 84A defines a first interlock interface 92A and the second outer shroud 84B defines a second interlock interface 92B, with the first and second interlock interfaces 92A, 92B correspondingly shaped to fit together.

It will be appreciated, that as used herein, the term "correspondingly shaped" with reference to two interlock interfaces refers to one interlock interface defining a shape that is substantially the inverse of the other interlock interface, such that relative movement therebetween is limited. For example, in the embodiment depicted, relative movement of the outer shrouds 84 is limited along the axial direction A due to the interlock interfaces 92 of adjacent outer shrouds 84 being correspondingly shaped. Accordingly, it will be appreciated that an at least certain embodiments, the interlock interfaces 92 may be nonlinear.

Referring still to Fig. 4, it will further be appreciated that for the embodiment shown, the stage of LP turbine rotor blades 60 may have been in operation for an extended period of time. More specifically, for the embodiment depicted, the interlock interfaces 92 of adjacent outer shrouds 84 have worn such that a gap 94 is defined therebetween. For example, for the embodiment depicted, the first outer shroud 84A of the first LP turbine rotor blade 60A and the second outer shroud 84B of the second LP turbine rotor blade 60B define a gap 94 therebetween, or more specifically, the first interlock interface 92A and the second interlock interface 92B together define the gap 94. For the embodiment depicted, the gap 94 has an actual gap width 98 that is greater than a predetermined threshold, the predetermined threshold being a minimum gap width threshold above which an undesired relative movement of LP turbine rotor blades 60 is allowed. More specifically, when a gap 94 having an actual gap width 98 greater than the predetermined threshold is present between adjacent outer shrouds 84, there is an increased risk of structural damage forming in the airfoil 80 of the LP turbine rotor blade 60. For example, presence of the gap 94 having an actual gap width 98 greater than the predetermined threshold may allow for blade residence, which can fracture the airfoil 80 of the vane (rotor blade 60) mid-span during operation.

Further, for the embodiment depicted, each pair of adjacent outer shrouds 84 of adjacent LP turbine rotor blades 60 defines a gap 94 having an actual gap width 98 greater than the predetermined threshold. Notably, for the embodiment depicted, the gap 94 between each adjacent outer shrouds 84 is defined generally along the circumferential direction C, as well as along the axial direction A in some sections.

Referring now to Fig. 5, providing another plan view of the outer shrouds 84 of the stage of LP turbine rotor blades 60 of Fig. 4, the stage of LP turbine rotor blades 60 has been repaired to reduce a risk of the LP turbine rotor blades 60 being damaged during operation. More specifically, for the embodiment of Fig. 5, a shim 96 has been installed in the gap 94 between the first outer shroud 84A of the first LP turbine rotor blade 60A and the second outer shroud 84B of the second LP turbine rotor blade 60B to reduce an effective gap width 98 of the gap 94 therebetween. More specifically, the shim 96 may be installed and permanently affixed in the gap 94 between the first outer shroud 84A and the second outer shroud 84B. For example, the shim 96 may be welded to the first outer shroud 84A, to the second outer shroud 84B, or both. Further, for the embodiment depicted, the gaps 94 defined between each of the plurality of outer shrouds 84 of the respective plurality of LP turbine rotor blades 60 includes a shim 96 installed therein to reduce an effective gap width 98 thereof. It will be appreciated that as used herein, the term "actual gap width" refers to an actual measure between interlocking interfaces 92 of outer shrouds 84 of adjacent vanes. Further, as used herein, the term "effective gap width" refers to the actual measure between interlocking interfaces 92 of outer shrouds 84 of adjacent vanes minus the thickness of any shims 96 positioned therebetween.

Referring still to Fig. 5, it will be appreciated that in certain exemplary embodiments, the shim 96 may be formed of a metal material, such as a high temperature metal alloy, capable of withstanding the temperatures of the section of the turbine within which it is installed. However, in other embodiments, any other suitable material may be used. For example, in certain embodiments, the shims 96 may be formed of a ceramic material, such as a ceramic matrix composite material, or any other suitable material.

Notably, while the discussion above refers to a single shim 96 being installed in an individual gap 94, in other exemplary embodiments, a plurality of shims 96 may be used. For example, a plurality of shims 96 may be used in a gap 94 along a length of the gap 94, a plurality of shims 96 may be used in a gap 94 across a thickness of the gap 94 (e.g., for a particularly wide gap), or both.

Additionally, it will be appreciated that in at least certain exemplary embodiments, the shims 96 may be installed in situ (i.e., while the stage of LP turbine rotor blades 60 is installed in the engine) such that the engine may not need to be taken off wing and/or taken apart in order to perform the repair.

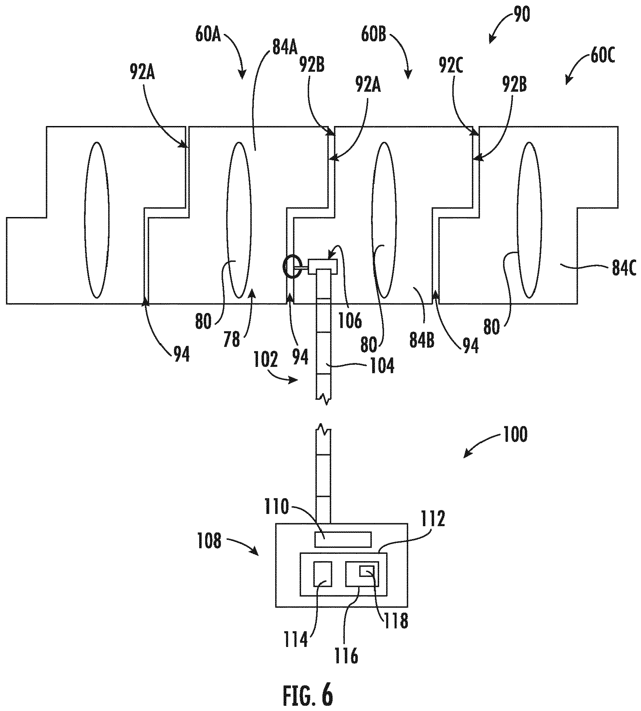

For example, referring back briefly to Fig. 2, and now also to Fig. 6 through 8, such in situ repair will be described in more detail. Specifically, with reference to Fig. 2, it will be appreciated that in certain embodiments, a repair tool (or simply "tool") may be inserted through the core air flowpath 37 of the engine 10 through, e.g., the exhaust 21 and exhaust section 32 of the engine 10 (see, also, Fig. 1) to the stage of LP turbine rotor blades 60. Specifically, for the embodiment depicted, the tool is inserted through the exhaust section 32 of the engine 10 to the aft most stage of LP turbine rotor blades 60 of the LP turbine 30. Notably, however, in other exemplary embodiments, the tool may instead be inserted further upstream, or through another opening in the engine 10 (such as a fuel nozzle port, a borescope opening, an igniter opening, etc.).

Referring now generally to Figs. 6 through 8, certain steps of the repair described herein are depicted. Fig. 6 through 8 provide plan views of outer shrouds 84 of a plurality of turbine vanes of a stage of turbine vanes, and more specifically, a plurality of LP turbine rotor blades 60 of an LP turbine 30 of the turbofan engine 10 in accordance with an exemplary embodiment of the present disclosure. For example, the LP turbine rotor blades 60 may be configured in substantially the same manner as one or more of the embodiments discussed above. Accordingly, the same or similar numbers may refer to same or similar parts.

Referring first to Fig. 6, the tool is inserted into the core air flowpath 37 adjacent to the stage of LP turbine rotor blades 60, and more specifically, adjacent to the outer shrouds 84 of the stage of LP turbine rotor blades 60. As will be appreciated, for the embodiment shown, the tool is configured as a snake tool 100 having a snake arm 102 formed of a plurality of segments 104 movable to a desired shape to perform certain functions. The snake arm 102 of the snake tool 100 includes a utility head 106 at a distal end, which may be affixed with a specific unit for performing a particular function. The snake arm 102 is coupled to a base 108 having one or more motors 110 and a controller 112. The one or more motors 110 may operate to move the snake arm 102 to perform a desired function, including, e.g., maneuvering the snake arm 102 into position, such that the utility head 106 is positioned in a desired location within the engine. Additionally, the controller 112 may be operably connected to the one or more motors 110 and, e.g., the utility head 106, to allow the snake tool 100 to perform desired functions.

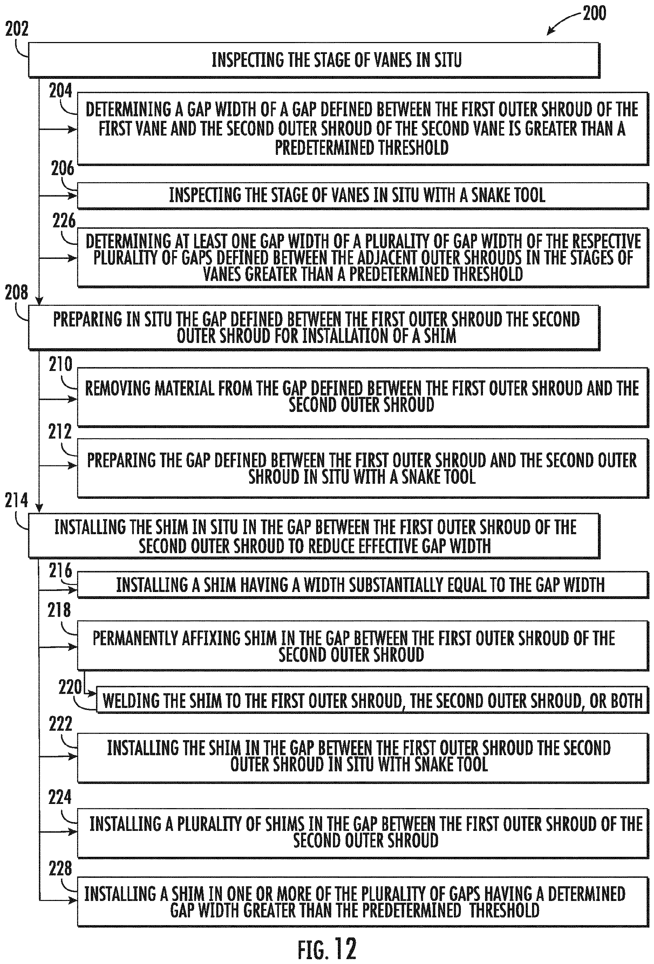

Briefly, for the embodiment depicted, the controller 112 includes one or more processors 114 and memory 116. The memory 116 stores data 118 accessible by the one or more processors 114. The one or more processor(s) 114 can include any suitable processing device, such as a microprocessor, microcontroller, integrated circuit, logic device, and/or other suitable processing device. The one or more memory device(s) 116 can include one or more computer-readable media, including, but not limited to, non-transitory computer-readable media, RAM, ROM, hard drives, flash drives, and/or other memory devices. The data 118 may include instructions that when executed by the one or more processors 114 cause the robot arm assembly 100 to perform functions. One or more exemplary aspects of these functions may be described below with respect to the exemplary method 200 of Fig. 12. Accordingly, it will be appreciated that the exemplary method 200 described below with reference to Fig. 12 may be a computer-implemented method.

The instructions within the data 118 can be any set of instructions that when executed by the one or more processor(s) 114, cause the one or more processor(s) 114 to perform operations. In certain exemplary embodiments, the instructions within the data 118 can be software written in any suitable programming language or can be implemented in hardware. Additionally, and/or alternatively, the instructions can be executed in logically and/or virtually separate threads on processor(s) 114. The memory device(s) 116 can further store other data 118 that can be accessed by the processor(s) 114.

Additionally, although not depicted, the controller 112 may include a network interface to allow the controller 112 to receive data from outside sources (e.g., one or more user input devices, sensors (such as proximity sensors or cameras), etc.).

Referring still to Fig. 6, the snake tool 100, or rather, the utility head 106 of the snake arm 102 may be configured to measure an actual gap width 98 of the gap 94 between a first outer shroud 84A of the plurality of outer shrouds 84 and a second outer shroud 84B of the plurality of outer shrouds 84. Accordingly, for the embodiment of Fig. 6, it will be appreciated that the utility head 106 may include one or more sensors included therein, or operably coupled thereto, and in communication with the controller 112. In subsequent steps, or simultaneously, the snake tool 100 (e.g., the controller 112 of the snake tool 100), or any other suitable controller, may determine the actual gap width 98 is greater than a predetermined threshold, such that a shim 96 should be installed therein. Subsequently, or simultaneously, the snake tool 100 may repair the gap 94 for installation of the shim 96. For the embodiment depicted, the snake tool 100 is depicted clearing the gap 94 using a pressurized fluid flow, such as a pressurized flow of air or water, to clean out debris or other materials within the gap 94. (The pressurized flow may be delivered to a nozzle of the utility head 106 through the snake arm 102 from, e.g., a source within the base 108 or elsewhere.) However, in other embodiments, any other suitable preparations may be made to repair the gap 94 for installation of the shim 96. For example, in other embodiments, the gap 94 may be widened to a desired with by e.g., cutting or otherwise removing material from one or both of the adjacent outer shrouds 84 using the snake tool 100.

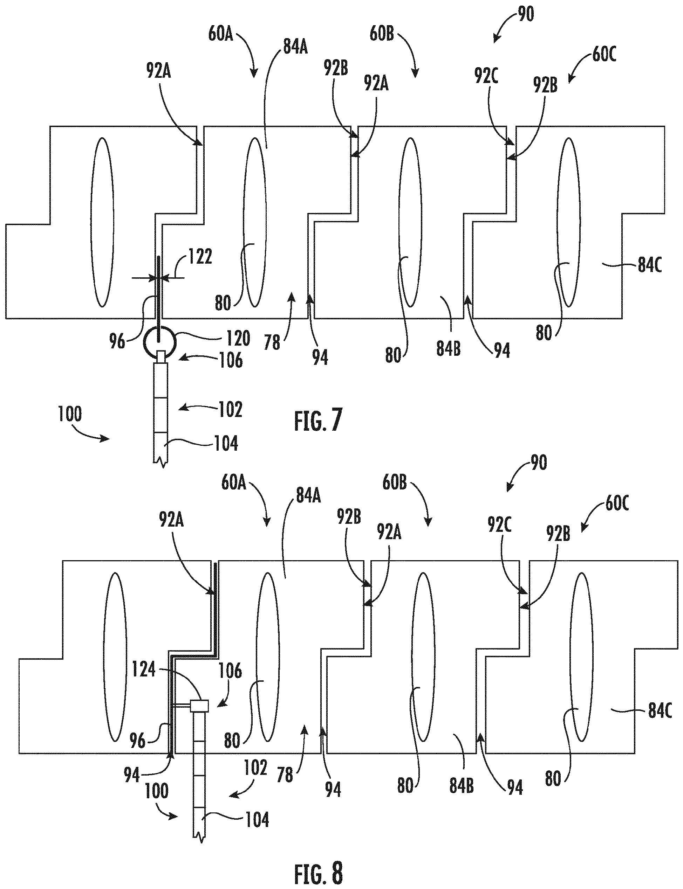

Referring now particularly to Fig. 7, the snake tool 100 may then position the shim 96 within the gap 94 defined between the adjacent outer shrouds 84. For the embodiment depicted, the snake tool 100 includes a gripper 120, or claw, attached to the snake arm 102 at the utility head 106 for moving the shim 96 into position. Notably, it will be appreciated, that for the embodiment depicted, the gap 94 defined between the adjacent outer shrouds 84 defines a zigzag shape. Accordingly, it will be appreciated that a plurality of shims 96 may be positioned in the gap 94 along a length of the gap 94 to substantially fill the gap 94. However, in other embodiments, a single shim 96 having a shape corresponding to the shape of the gap 94 may be utilized.

Further, it will be appreciated that for the embodiment depicted, the shim 96 defines a thickness 122 that is substantially equal to the actual gap width 98 of the gap 94 within which it is installed. However, in other exemplary embodiments, the shims 96 may define a thickness 122 that is substantially less than the actual gap width 98, such that a plurality of shims 96 are positioned widthwise in the gap 94.

Referring now particularly to Fig. 8, it will be appreciated that once the shim(s) 96 are positioned in the gap 94, the snake tool 100 may permanently affix the shim(s) 96 in position. For example, for the embodiment depicted, the snake tool 100 may weld the shim(s) 96 to the first outer shroud 84A, to the second outer shroud 84B, or both. In such a manner, it will be appreciated that for the embodiment of Fig. 8, the snake tool 100 includes a welder 124 attached to the utility head 106 thereof to perform such functions. Notably, however, in other exemplary embodiments, any other suitable means may be provided for permanently affixing the shim(s) 96 in the gap 94. For example, in other embodiments, the shim(s) 96 may be installed with a glue or other binder to permanently attach the shim(s) 96 to one or both of the outer shrouds 84 defining the gap 94 within which it/they are positioned.

By utilizing one or more shims 96 to repair the stage of LP turbine rotor blades 60 in situ (i.e., repair the stage of LP turbine rotor blades 60 without the engine being substantially disassembled to expose the LP turbine rotor blades 60 and/or taken off wing), substantial time and cost may be saved, while allowing the engine to stay operable and on wing for a greater amount of time.

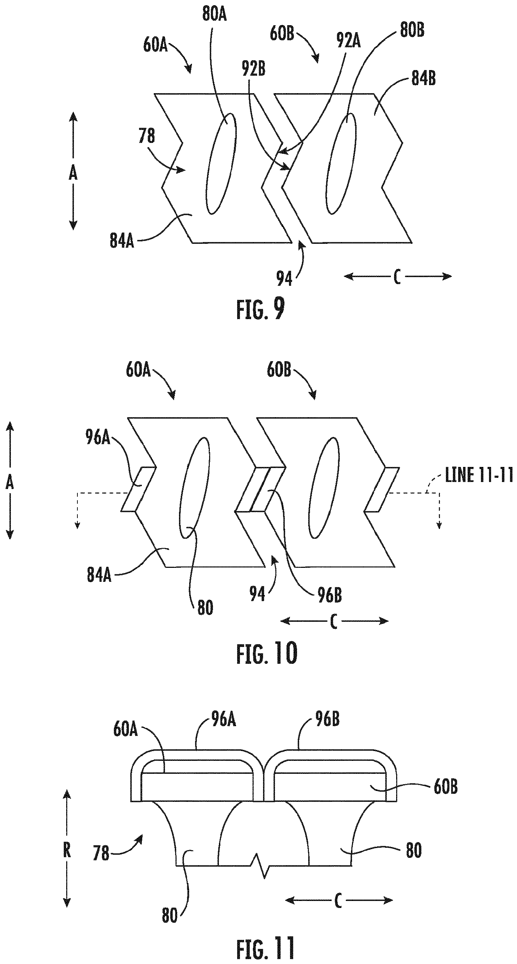

It will be appreciated, however, that in other exemplary embodiments, the outer shrouds 84 of a stage of turbine vanes of a turbine of an engine may be configured in any other suitable manner. For example, referring now to Fig. 9, a plan view of a plurality of outer shrouds 84 of a stage of turbine vanes in accordance with another exemplary embodiment of the present disclosure is provided. The exemplary shrouds 84 of Fig. 9 may be incorporated into an LP turbine 30 configured in substantially the same manner as one or more the exemplary LP turbines 30 described above. Accordingly, it will be appreciated that the LP turbine 30 generally includes a plurality of LP turbine rotor blades 60 configured as a stage of interlocking turbine vanes. A first LP turbine rotor blades 60A and a second LP turbine rotor blades 60B are depicted. The first and second LP turbine rotor blades 60A, 60B each include an airfoil 80A, 80B and an outer shroud 84A, 84B positioned at their respective radially outer ends 78. Additionally, each outer shroud 84A, 84B defines an interlock interface 92A, 92B, respectively, with each interlock interface 92A, 92B being correspondingly shaped with the interlock interfaces of the adjacent outer shrouds.

However, for the embodiment depicted, the interlock interfaces 92A, 92B each define a "zig-zag" shape. Such a configuration lends itself to optionally include a differently shaped shim 96. More specifically, referring now to Fig. 10, the embodiment of Fig. 9 is depicted with a plurality of shims 96 installed. More specifically, a first shim 96A is installed around the first interlock interface 92A, and a second shim 96B is installed around the second interlock interface 92B. As will be appreciated, the first shim 96A is positioned on the first interlock interface 92A on opposing circumferential sides of the outer shroud 84A, and similarly, the second shim 96B is positioned on the second interlock interface 92B on opposing circumferential sides of the outer shroud 84B.

More particularly, referring now to Fig. 11, providing a cross-sectional view of the outer shrouds 84A, 84B of Fig. 10, along Line 11-11, it will be appreciated that the first shim 96A and second shim 96B are each configured as "U-shaped" shims. More specifically, each of the first and second shims 96A, 96B for the embodiment depicted extend continuously from the respective interlock interface 92A, 92B on one side of the respective outer shroud 84A, 84B to the other, opposite circumferential, side of the outer shroud 84A, 84B. The shims 96A, 96B may be installed in substantially the same manner as the exemplary shims 96 described above, or below with respect to the exemplary method 200.

It will be appreciated that such a configuration may allow for a more efficient installation process. Moreover, it will be appreciated that the exemplary shims 96 depicted in Figs. 9 through 11, or elsewhere, may be coated with a brazing or other substance, such that it need only be activated, e.g., by heat, to fix the shim 96 in place once installed.

Referring now to Fig. 12, a flow diagram is provided of a method 200 for repairing a turbine engine in accordance with an exemplary aspect of the present disclosure. The turbine engine may be configured in accordance with one or more the exemplary embodiments described above. For example, in certain exemplary aspects, the turbine engine may have a stage of vanes, the stage of vanes including a first vane having a first shroud at a radially outer end and a second vane having a second shroud at a radially outer end.

As is depicted, the method 200 includes at (202) inspecting the stage of vanes in situ. More specifically, for the exemplary aspect depicted, inspecting the stage of vanes in situ at (202) includes at (204) determining an actual gap width of a gap defined between the first outer shroud of the first vane and the second outer shroud of the second vane is greater than a predetermined threshold. More specifically, still, for the exemplary aspect depicted, inspecting the stage of vanes in situ at (202) includes at (206) inspecting the stage of vanes in situ with a snake tool.

Moreover, for the exemplary aspect depicted, the method 200 further includes at (208) preparing in situ the gap defined between the first outer shroud the second outer shroud for installation of a shim. More specifically, for the exemplary aspect depicted, preparing in situ the gap defined between the first outer shroud and the second outer shroud for installation of the shim at (208) includes at (210) removing in situ material from the gap defined between the first outer shroud and the second outer shroud. More specifically, still, for the exemplary aspect depicted preparing in situ the gap defined between the first outer shroud and the second outer shroud for installation of the shim at (208) includes at (212) preparing in situ the gap defined between the first outer shroud and the second outer shroud with a snake tool.

Further, for the exemplary aspect depicted, the method 200 includes at (214) installing the shim in situ in the gap between the first outer shroud and the second outer shroud to reduce an effective gap width. In at least certain exemplary aspects, installing the shim in the gap at (214) includes at (216) installing a shim in situ having a width substantially equal to the actual gap width. For example, although not depicted, in certain exemplary aspects, inspecting the stage of airflows at (202) may include measuring the actual gap width of the gap, and installing the shim in the gap at (214) may further include selecting or forming a shim having a thickness substantially equal to the actual gap width measured. Further, in still other exemplary aspects, inspecting the stage of vanes in situ at (202) may include determining a two-dimensional or three-dimensional shape of the gap, and installing the shim in the gap at (214) may include selecting or forming a shim having a two-dimensional or three-dimensional shape substantially equal to the two-dimensional or three-dimensional shape of the gap measured. It should be appreciated that as used herein, the term "substantially," with respect to the shape of the gap and shim, refers to the shim being within 10% of the shape of the gap by linear or two-dimensional measure, or 10% by volume for three-dimensional measure.

As is also depicted in Fig. 12, for the aspect depicted, installing the shim in the gap between the first outer shroud and the second outer shroud at (214) includes at (218) permanently affixing the shim in the gap between the first outer shroud of the second outer shroud. More specifically, for the exemplary aspect depicted, permanently affixing the shim in the gap at (218) includes at (220) welding the shim to the first outer shroud, the second outer shroud, or both. It will be appreciated, however, that in other exemplary aspects, any other suitable means may be provided for permanently affixing the shim in the gap (e.g., using an adhesive), or alternatively, in other exemplary aspects, the shim may not be permanently affixed in the gap. Notably, as used herein, the term "permanently affixed" with reference to a shim and a gap refers to the shim being affixed in the gap such that it may not be removed without cutting, melting, or otherwise deforming the shim or a surrounding component.

As will also be appreciated from the description herein, for the exemplary aspect Fig. 12, installing the shim in the gap between the first outer shroud and the second outer shroud at (214) additionally includes at (222) installing the shim in the gap between the first outer shroud the second outer shroud in situ with snake tool. For example, the snake tool may utilize more include a claw or gripper utility head to a position the shim in the gap, as well as a welding utility head to affix the shim to the first outer shroud and/or the second outer shroud. As will also be appreciated, in certain exemplary aspects, more than one shim may be utilized to fill the gap between the first outer shroud of the second outer shroud. Accordingly, it will be appreciated that in certain exemplary aspects, such as the exemplary aspect depicted in Fig. 12, installing the shim in the gap between the first outer shroud and the second outer shroud at (214) further includes at (224) installing a plurality of shims in the gap between the first outer shroud and the second outer shroud.

Lastly, it will be appreciated that the first vane and second vane are two vanes of a plurality of vanes of the stage of vanes. Accordingly, it will be appreciated that for the exemplary aspect depicted, each of the plurality of vanes similarly includes an outer shroud at its respective radially outer end, and that inspecting the vanes at (202) further includes at (226) determining at least one actual gap width of a plurality of actual gap widths of the respective plurality of gaps defined between the adjacent outer shrouds in the stage of vanes greater than a predetermined threshold. With such an exemplary aspect, installing the shim in the gap between the first outer shroud and the second outer shroud at (214) further includes at (228) installing a shim in situ in one or more of the plurality of gaps having a determined actual gap width greater than the predetermined threshold. More specifically in at least certain exemplary aspects, installing the shim in the gap between the first outer shroud and second outer shroud at (214) further includes installing a shim in situ in each of the actual gaps having a determined gap width greater than the predetermined threshold.

It will be appreciated that repairing a turbine engine in accordance with such an exemplary aspect may result in a relatively inexpensive and quick way to repair the turbine engine, allowing for an increased time on wing of the turbine engine and saving repair costs and downtime.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the invention are provided by the subject matter of the following clauses:
1. A method for repairing a turbine engine comprising a stage of vanes, the stage of vanes including a first vane having a first shroud and a second vane having a second shroud, the method comprising:
   inspecting the stage of vanes in situ, wherein inspecting the stage of vanes in situ comprises determining an actual gap width of a gap defined between the first shroud of the first vane and the second shroud of the second vane is greater than a predetermined threshold; and
   installing a shim in situ in the gap between the first shroud and the second shroud.
2. The method of clause 1, wherein installing the shim in situ in the gap between the first shroud and the second shroud comprises permanently affixing the shim in the gap between the first shroud and the second shroud.
3. The method of clause 2, wherein permanently affixing the shim in the gap comprises welding the shim to the first shroud, the second shroud, or both.
4. The method of any preceding clause, wherein installing the shim in situ in the gap comprises installing the shim having a width substantially equal to the actual gap width.
5. The method of any preceding clause, wherein the stage of vanes is a stage of turbine rotor blades.
6. The method of clause 5, wherein the stage of turbine rotor blades is a stage of low pressure turbine rotor blades.
7. The method of clause 6, wherein the stage of low pressure turbine rotor blades is an aft-most stage of low pressure turbine rotor blades.
8. The method of any preceding clause, wherein the first shroud defines a first interlock interface, wherein the second shroud defines a second interlock interface, and wherein the first interlock interface and second interlock interface are correspondingly shaped to fit together.
9. The method of any preceding clause, further comprising:
   preparing in situ the gap defined between the first shroud and the second shroud for installation of the shim.
10. The method of clause 9, wherein preparing in situ the gap defined between the first shroud and the second shroud for installation of the shim comprises removing material from the gap defined between the first shroud and the second shroud.
11. The method of clause 9 or 10, wherein preparing in situ the gap defined between the first shroud and the second shroud for installation of the shim comprises preparing in situ the gap defined between the first shroud and the second shroud with a snake tool.
12. The method of any preceding clause, wherein inspecting the stage of vanes in situ further comprises inspecting the stage of vanes in situ with a snake tool.
13. The method of any preceding clause, wherein installing the shim in situ in the gap between the first shroud and the second shroud comprises installing the shim in the gap between the first shroud and the second shroud in situ with a snake tool.
14. The method of any preceding clause, wherein the first vane and the second vane are two vanes of a plurality of vanes of the stage of vanes, wherein each of the plurality of vanes includes an shroud at a respective radially outer end, wherein inspecting the vanes further comprises determining at least one actual gap width of a plurality of actual gap widths of a respective plurality of gaps defined between adjacent shrouds in the stage of vanes greater than the predetermined threshold, and wherein installing the shim in situ in the gap between the first shroud and the second shroud comprises installing the shim in situ in one or more of the plurality of gaps having a determined actual gap width greater than the predetermined threshold.
15. The method of any preceding clause, wherein installing the shim in situ in the gap between the first shroud and the second shroud comprises installing a plurality of shims in the gap between the first shroud and the second shroud.
16. A repair tool for a gas turbine engine comprising:
   a snake arm; and
   a base having the snake arm attached thereto, the base including one or more motors operably coupled to the snake arm and a controller, the controller operably coupled to the one or more motors and including one or more processors and memory, the memory storing data and instructions that when processed by the one or more processors cause the repair tool to perform functions, the functions including
      inspecting a stage of vanes of the gas turbine engine in situ, wherein inspecting the stage of vanes in situ comprises determining an actual gap width of a gap defined between a first shroud of a first vane in the stage of vanes and a second shroud of a second vane in the stage of vanes is greater than a predetermined threshold; and
      installing a shim in situ in the gap between the first shroud and the second shroud with the snake arm.
17. The repair tool of clause 16, wherein installing the shim in situ in the gap between the first shroud and the second shroud with the snake arm comprises permanently affixing the shim in the gap between the first shroud and the second shroud with the snake arm.
18. The repair tool of clause 17, wherein permanently affixing the shim in the gap with the snake arm comprises welding the shim to the first shroud, the second shroud, or both with the snake arm.
19. The repair tool of any of clauses 16-18, wherein installing the shim in situ in the gap with the snake arm comprises installing the shim having a width substantially equal to the actual gap width with the snake arm.
20. The repair tool of any of clauses 16-19, wherein the functions further include:
   preparing the gap defined between the first shroud and the second shroud for installation of the shim in situ with the snake arm.

## Claims

1. A method (200) for repairing a turbine engine comprising a stage of vanes, the stage of vanes including a first vane having a first shroud and a second vane having a second shroud, the method (200) comprising:
inspecting at (202) the stage of vanes in situ, wherein inspecting the stage of vanes in situ at (202) comprises at (204) determining an actual gap width of a gap defined between the first shroud of the first vane and the second shroud of the second vane is greater than a predetermined threshold; and
installing at (214) a shim in situ in the gap between the first shroud and the second shroud.

2. The method (200) of claim 1, wherein installing the shim in situ in the gap between the first shroud and the second shroud at (214) comprises at (218) permanently affixing the shim in the gap between the first shroud and the second shroud.

3. The method (200) of claim 2, wherein permanently affixing the shim in the gap at (218) comprises at (220) welding the shim to the first shroud, the second shroud, or both.

4. The method (200) of any of claims 1 to 3, wherein installing the shim in situ in the gap at (214) comprises at (216) installing the shim having a width substantially equal to the actual gap width.

5. The method (200) of any of claims 1 to 4, wherein the stage of vanes is a stage of turbine rotor blades.

6. The method (200) of claim 5, wherein the stage of turbine rotor blades is a stage of low pressure turbine rotor blades.

7. The method (200) of claim 6, wherein the stage of low pressure turbine rotor blades is an aft-most stage of low pressure turbine rotor blades.

8. The method (200) of any of claims 1 to 7, wherein the first shroud defines a first interlock interface, wherein the second shroud defines a second interlock interface, and wherein the first interlock interface and second interlock interface are correspondingly shaped to fit together.

9. The method (200) of any of claims 1 to 8, further comprising:
Preparing at (208) in situ the gap defined between the first shroud and the second shroud for installation of the shim.

10. The method (200) of claim 9, wherein preparing in situ the gap defined between the first shroud and the second shroud for installation of the shim at (208) comprises removing at (210) material from the gap defined between the first shroud and the second shroud.

11. The method (200) of claim 9 or 10, wherein preparing in situ the gap defined between the first shroud and the second shroud for installation of the shim at (208) comprises preparing at (212) in situ the gap defined between the first shroud and the second shroud with a snake tool.

12. The method (200) of any of claims 1 to 11, wherein inspecting the stage of vanes in situ at (202) further comprises at (206) inspecting the stage of vanes in situ with a snake tool.

13. The method (200) of any of claims 1 to 12, wherein installing the shim in situ in the gap between the first shroud and the second shroud at (214) comprises installing at (222) the shim in the gap between the first shroud and the second shroud in situ with a snake tool.

14. The method (200) of any of claims 1 to 13, wherein the first vane and the second vane are two vanes of a plurality of vanes of the stage of vanes, wherein each of the plurality of vanes includes an shroud at a respective radially outer end, wherein inspecting the vanes at (202) further comprises determining at (204) at least one actual gap width of a plurality of actual gap widths of a respective plurality of gaps defined between adjacent shrouds in the stage of vanes greater than the predetermined threshold, and wherein installing at (214) the shim in situ in the gap between the first shroud and the second shroud comprises installing at (228) the shim in situ in one or more of the plurality of gaps having a determined actual gap width greater than the predetermined threshold.

15. The method (200) of any of claims 1 to 14, wherein installing the shim in situ in the gap between the first shroud and the second shroud at (214) comprises installing at (224) a plurality of shims in the gap between the first shroud and the second shroud.
